(19) Europäisches Patentamt / European Patent Office / Office européen des brevets

(11) **EP 2 639 977 B1**

## (12) EUROPEAN PATENT SPECIFICATION

(45) Date of publication and mention
of the grant of the patent:
**29.11.2017  Bulletin 2017/48**

(51) Int Cl.:
**H04B 10/61** (2013.01)

(21) Application number: **12305315.9**

(22) Date of filing: **16.03.2012**

(54) **High speed algorithms for 400G optical communication systems**

Hochgeschwindigkeits-Algorithmen für optische Kommunikationssysteme mit 400G

Algorithmes à grande vitesse pour des systèmes de communication optique 400G

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**18.09.2013  Bulletin 2013/38**

(73) Proprietor: **ALCATEL LUCENT
92100 Boulogne-Billancourt (FR)**

(72) Inventor: **Buchali, Fred
71336 Waiblingen (DE)**

(74) Representative: **Wetzel, Emmanuelle et al
Alcatel-Lucent
Intellectual Property Business Group
70430 Stuttgart (DE)**

(56) References cited:
EP-A1- 2 273 701          US-A1- 2005 196 176
US-A1- 2010 142 952     US-A1- 2010 329 683
US-A1- 2011 096 855

• MD SAIFUDDIN FARUK ET AL: "Proper
polarization demultiplexing in coherent optical
receiver using constant modulus algorithm with
training mode", OPTOEELECTRONICS AND
COMMUNICATIONS CONFERENCE (OECC), 2010
15TH, IEEE, PISCATAWAY, NJ, USA, 5 July 2010
(2010-07-05), pages 768-769, XP031765274, ISBN:
978-1-4244-6785-3

## Description

The present document relates to optical communication systems. In particular, the present document relates the digital signal processing performed at coherent optical receivers in such optical communication systems.

US Patent Application Publication US 2010/0329683 A1 discloses a coherent optical receiver comprising a optical to digital converter adapted to convert the received optical signal into a digital signal comprising two polarization components, a synchronization unit, a channel estimation unit for determining a indication of the transfer function based on the sequence of received training symbols and a polarization demultiplexing unit.

Publication "Proper polarization demultiplexing in coherent optical receiver using constant modulus algorithm with training mode", Optoelectronics and Communications Conference (OECC), 2010 15TH, IEEE, Piscataway, NJ, USA, 5. July 2010, p. 768-769 discloses a constant modulus algorithm in a digital coherent optical receiver. The receiver comprises a two-by-two butterfly FIR-filter configuration for polarization de-multiplexing. To overcome the singularity problem, which means both outputs converge to the same polarization tributary, D2 suggests using a training sequence to determine the initial filter taps and later on switching to constant modulus algorithm.

100Gbit/s optical communication systems typically make use of wavelength division multiplex (WDM) channels with a channel spacing of 50GHz and a polarization multiplexed, QPSK modulated, optical signals with a symbol rate of 28Gbaud per polarization component. The optical signals are transmitted using a particular carrier frequency corresponding to the particular WDM channel.

Coherent optical receivers are used to recover the symbols comprised within the optical signal. The coherent optical receivers convert the received optical signal into a digital signal which is processed using a digital signal processor (DSP). The DSP performs functions such as the compensation of chromatic dispersion (CD), polarization demultiplexing, carrier frequency estimation and componensation, phase estimation and compensation, as well as symbol detection. In order to perform some or all of the above mentioned functions, the DSP makes use of algorithms which adapted the signal processing of the received signal to variations of the WDM transmission channel. For this purpose, the algorithms typically make use of blind adaptation. The performance of the adaptive signal processing is typically sufficient in the presence of non time variant transmission channels and transmission channels with slow variations. However, it has been observed that the adaptation to fast varying channels is limited. This is particularly challenging, when handling high transmission rates (e.g. when handling next generation 400G coherent transmission systems). The increase of the transmission rate typically goes along with a decreased adaptation speed of signal processing algorithms, whereas an increase of speed is required for optimum performance.

The present document addresses the above mentioned shortcomings of coherent transmission systems. In particular, the present document describes a method and system for increasing the adaptation speed of the signal processing in coherent transmission systems, thereby enabling high transmission rates (e.g. 400Gb/s WDM transmission systems).

According to an aspect, a coherent optical receiver adapted to recover a plurality of payload symbols transmitted over a transmission channel within a received optical signal is described. The received optical signal may e.g. be a wavelength division multiplex (WDM) optical signal at a carrier frequency. The received optical signal may be a polarization multiplexed optical signal comprising a first polarization component and a second polarization component. The first polarization component and the second polarization component may be orthogonal with respect to one another. In particular, the first polarization component may be arranged a first polarization plane and the second polarization component may be in a second polarization plane. The first and second polarization planes may be orthogonal with respect to one another. Furthermore, the received optical signal may comprise a sequence of received training symbols corresponding to a sequence of transmitted training symbols, i.e. the received optical signal may comprise received training symbols, wherein the transmitted training symbols are known to the coherent optical receiver. By way of example, information regarding the training symbols may have been exchanged between a transmitter of the optical signal and the coherent optical receiver via a control plane of the optical transmission channel, thereby informing the coherent optical receiver of the sequence of transmitted training symbols.

The coherent optical receiver may comprise an optical-to-digital converter adapted to convert the received optical signal into a digital signal comprising two polarization components. The optical-to-digital converter may comprise a local oscillator generating a local oscillator signal at a local oscillator frequency corresponding to the carrier frequency. Furthermore, the optical-to-digital converter may comprise a coherent mixer adapted to generate optical interference signals, by interfering the received optical signal with phase shifted versions of the local oscillator signal. In addition, the optical-to-digital converter may comprise photodiodes adapted to convert the optical interference signals into analog signals and analog-to-digital converters adapted to generate the polarization components of the digital signal from the analog signals. Typically, the resulting polarization components of the digital signal are complex valued comprising an in-phase component and a quadrature-phase component.

The coherent optical receiver comprises a synchronization unit adapted to extract the sequence of received training symbols from the digital signal. In view of the fact that the optical signal is polarization multiplexed, this typically also applies to the sequence of training symbols. Hence, the sequence of transmitted training symbols (TS) may comprise a sequence of first TS components and a sequence of second TS components for the recovery of first and second polarization planes, respectively. As indicated above, the transmission channels in first and second polarization planes may be orthogonal with respect to one another. In addition, the first and second TS components may be orthogonal with respect to one another, thereby enabling a separation of the first and second components at the coherent optical receiver.

For synchronization purposes, the received optical signal may comprise a sequence of synchronization symbols and the sequence of synchronization symbols may comprise a plurality of sub-sequences. At least some of the plurality of sub-sequences may be correlated with each other. By way of example, at least some of the plurality of sub-sequences may be identical. The synchronization unit may be adapted to detect the sequence of synchronization symbols from the received optical signal by analyzing a correlation between sub-sequences of symbols comprised within the received optical signal. By way of example, the synchronization unit may be adapted to determine the correlation of shifted versions of the sequence of synchronization symbols and determine a correlation peak at a particular shift value. In particular, the synchronization unit may know that the sequence of synchronization symbols comprises a first and second subsequence which are correlated and which are spaced from each other by a pre-determined offset. The synchronization unit may be adapted to determine the correlation of two versions of the digital signal which are shifted by the pre-determined offset. The sequence of synchronization symbols may be detected by determining that the correlation exceeds a correlation threshold. Subsequent to synchronization with the received optical signal, the synchronization unit may be adapted to extract the sequence of received training symbols from the digital signal at a pre-determined distance from the detected sequence of synchronization symbols.

The coherent optical receiver may comprise a channel estimation unit adapted to determine an indication of a transfer function of the transmission channel, based on the sequence of received training symbols and based on the sequence of transmitted training symbols. The indication may also be referred to as an estimation of the transfer function. Furthermore, the coherent optical receiver may comprise a polarization de-multiplexing unit adapted to rotate (and possibly equalize) the digital signal, based on the indication of the transfer function of the transmission channel, thereby yielding a polarization de-multiplexed digital signal.

In addition, the coherent optical receiver may comprise a blind adaptation unit adapted to determine an indication of a target deviation of a characteristic of the polarization de-multiplexed digital signal from an expected characteristic. The expected characteristic may e.g. be the fact that the (complex) samples of the polarization de-multiplexed digital signal should lie on a circle having a certain radius within the complex plane (as is the case e.g. for QPSK signals). The target deviation may indicate a (Euclidian) distance of the samples of the polarization de-multiplexed digital signal from this expected characteristic. In such cases, the polarization de-multiplexing unit may be adapted to rotate the digital signal, based on the indication of the transfer function of the transmission channel and based on the indication of the target deviation.

The polarization de-multiplexing unit may comprise a butterfly filter comprising a plurality of (typically four) finite impulse response (FIR) filters having a set of filter coefficients each. The butterfly filter may be adapted to filter the digital signal, thereby yielding the polarization de-multiplexed digital signal. Furthermore, the coherent optical receiver may comprise an adaptation unit adapted to determine the plurality of sets of filter coefficients based on the indication of the transfer function of the transmission channel. In particular, the channel estimation unit may be adapted to determine the indication of the transfer function of the transmission channel by reducing (e.g. minimizing) an error between the sequence of transmitted training symbols and the sequence of received training symbols subsequent to polarization de-multiplexing by the polarization de-multiplexing unit. Hence, the plurality of sets of filter coefficients may be determined by reducing (e.g. minimizing) an error between the sequence of transmitted training symbols and the sequence of received training symbols subsequent to filtering with the plurality of FIR filters. It should be noted that the plurality of FIR filters may be applied in the frequency domain onto the digital signal in the frequency domain. For this purpose, the digital signal may be transformed into the frequency domain using e.g. a Fast Fourier Transform. The filtering may be performed in the frequency domain using the plurality of FIR filters in the frequency domain. Subsequent to filtering, the filtered signal may be transformed back into the time domain, e.g. using an inverse Fast Fourier Transform.

The synchronization unit may be adapted to extract a subsequent second sequence of received training symbols from the digital signal, wherein the second sequence of received training symbols corresponds to a second sequence of transmitted training symbols. Typically, the optical signal comprises a plurality of sequences of training symbols which are interleaved by a corresponding plurality of sequences of payload symbols, e.g. in a periodic manner. As such, the optical receiver may receive a new sequence of training symbols at a pre-determined training symbol frequency and two succeeding sequences of training symbols may be spaced by a training symbol time interval.

The channel estimation unit may be adapted to determine a second indication of the transfer function of the transmission channel, based on the second sequence of received training symbols and based on the second sequence of transmitted training symbols. In other words, the channel estimation unit may be adapted to determine a new indication of the transfer function of the transmission channel based on the newly received sequence of training symbols, e.g. at the training symbol frequency. The adaptation unit may then be adapted to determine the plurality of sets of filter coefficients also based on the second indication of the transfer function of the transmission channel. In other words, the adaptation unit may be adapted to update the plurality of sets of filter coefficients based on the newly determined indication of the transfer function.

In particular, the adaptation unit may be adapted to determine a first plurality of sets of filter coefficients based on the indication of the transfer function of the transmission channel and a second plurality of sets of filter coefficients based on the second indication of the transfer function of the transmission channel. In general terms, the adaptation unit may be adapted to determine a plurality of sets of filter coefficients based on a newly received sequence of training symbols, e.g. at the training symbol frequency. The adaptation unit may then be adapted to determine the plurality of sets of filter coefficients based on a smooth transition from the first plurality of sets of filter coefficients to the second plurality of sets of filter coefficients. As indicated above, sequences of training symbols may be received periodically at a training symbol time interval. The smooth transition from a former set of filter coefficients to a new set of filter coefficients may be such that a time interval for the transition from the first plurality of sets of filter coefficients to the second plurality of sets of filter coefficients corresponds to the training symbol time interval.

Alternatively or in addition, a time interval for the smooth transition may depend on spectral characteristics of the first plurality of sets of filter coefficients and the second plurality of sets of filter coefficients. In particular, the time interval for the smooth transition may be lengthened if a respective difference between the first plurality of sets of filter coefficients and the second plurality of sets of filter coefficients varies randomly in the frequency domain. In other words, if it is determined that there is reduced correlation between a former set of filter coefficients and an updated set of filter coefficients, the transition time to the updated set of filter coefficients may be lengthened, thereby yielding an averaging across multiple sets of filter coefficients. On the other hand, the time interval for the smooth transition may be shortened, if the respective difference between the first plurality of sets of filter coefficients and the second plurality of sets of filter coefficients varies systematically in the frequency domain (e.g. if there is an increased correlation between the former set of filter coefficients and the updated set of filter coefficients. In other words, a systematic change of the sets of filter coefficients is typically combined with a fast, i.e. short, adaptation using small steps, in order to allow for a smooth transition. In case of a systematic change, a large forget factor may be used. In case of noisy sets of filter coefficients, a single update with the new set of filter coefficients may be sufficient (and using e.g. a small forget factor), thereby allowing for an integration of the noisy sets of filter coefficients across multiple training symbol time intervals.

In yet other words, the smooth transition may make use of a delta value determined based on the first plurality of sets of filter coefficients and the second plurality of sets of filter coefficients. By way of example, the delta value may be determined based on a difference between the first plurality of sets of filter coefficients and the second plurality of sets of filter coefficients. In particular, the smooth transition may make use of a plurality of delta values, one for each of the filter coefficients. Furthermore, the smooth transition may make use of a forget factor. The forget factor may be a multiplier for the delta value. By way of example, the training symbol time interval may be divided into a plurality of subintervals. In each subinterval, the product of forget factor and delta value may be added to the current plurality of sets of filter coefficients, thereby smoothly updating the plurality of sets of filter coefficients in a recursive manner.

The forget factor for the smooth transition may be adapted to the spectral characteristics of the plurality of sets of filter coefficients. In particular, the forget factor may be decreased if a respective difference between the first plurality of sets of filter coefficients and the second plurality of sets of filter coefficients varies randomly in the frequency domain. Furthermore, the forget factor for the smooth transition may be increased if the respective difference between the first plurality of sets of filter coefficients and the second plurality of sets of filter coefficients varies systematically in the frequency domain.

As indicated above, the coherent optical receiver may comprise a blind adaptation unit adapted to determine an update of the plurality of sets of filter coefficients based on expected characteristics of the polarization de-multiplexed digital signal, in particular based on the target deviation. For this purpose, the blind adaptation unit may make use e.g. of a constant modulus algorithm (CMA) or of a Multi Modulus Algorithm (MMA) as described e.g. in the European patent application EP11290070.9. The adaptation unit may be adapted to adapt the plurality of sets of filter coefficients also based on the update provided by the blind adaptation unit.

As indicated above, the received optical signal may comprise a plurality of sequences of received training symbols occurring at a training symbol frequency, and the channel estimation unit may be adapted to determine an updated indication of the transfer function of the transmission channel at the training symbol frequency. In a similar manner, the blind adaptation unit may be adapted to determine a plurality of indications of the target deviation of the characteristic of the polarization de-multiplexed digital signal from the expected characteristic at a blind adaptation frequency. In other words, the blind adaptation unit may regularly determine the indications of the target deviation at the blind adaptation frequency. The blind adaptation frequency may be higher than the training symbol frequency, e.g. 10 or 100 times higher. The polarization de-multiplexing unit may be adapted to rotate the digital signal, based on the plurality of updated indications of the transfer function of the transmission channel and based on the plurality of indications of the target deviation.

It may be beneficial to select an appropriate sequence of training symbols (e.g. depending on the distortions incurred on the transmission channel). The transmitted training symbols may originate from a same underlying constellation than the payload symbols. By way of example, the training symbols and the payload symbols may be 16QAM (Quadrature Amplitude Modulation) symbols. The underlying constellation may comprise symbols with different amplitudes. In case of 16QAM, the symbols may have three different amplitudes (a minimum amplitude, a medium amplitude and a maximum amplitude). All of the transmitted training symbols may have a maximum amplitude of the symbols comprised in the underlying constellation. In other words, the transmitted training symbols may be selected from an outer ring of the underlying constellation. This may be beneficial in presence of noise limitation. Alternatively, all of the transmitted training symbols may have a medium amplitude of the symbols comprised in the underlying constellation. In other words, the transmitted training symbols may be selected from a medium ring of the underlying constellation. Alternatively, all of the transmitted training symbols may have a minimum amplitude of the symbols comprised in the underlying constellation. In other words, the transmitted training symbols may be selected from an inner ring of the underlying constellation. This may be beneficial for operating close to the nonlinear limit.

According to a further aspect, a method for recovering a plurality of payload symbols transmitted over a transmission channel within a received optical signal is described. The method may be performed using a coherent optical receiver. The received optical signal may be a polarization multiplexed optical signal comprising a first component and a second component. The received optical signal may comprise a sequence of received training symbols corresponding to a sequence of transmitted training symbols. The method may comprise converting the received optical signal into a digital signal comprising two polarization components. The method proceeds in extracting the sequence of received training symbols from the digital signal. Subsequently, an indication of a transfer function of the transmission channel is determined, based on the sequence of received training symbols and based on the sequence of transmitted training symbols, and the digital signal is rotated, based on the indication of the transfer function of the transmission channel, thereby yielding a polarization de-multiplexed digital signal.

In particular, the method may comprise determining an indication of a target deviation of a characteristic of the polarization de-multiplexed digital signal from an expected characteristic. In such cases, the rotating of the digital signal may be based on the indication of the transfer function of the transmission channel and based on the indication of the target deviation.

According to a further aspect, a software program is described. The software program may be adapted for execution on a processor and for performing the method steps outlined in the present document when carried out on a computing device.

According to another aspect, a storage medium is described. The storage medium may comprise a software program adapted for execution on a processor and for performing the method steps outlined in the present document when carried out on a computing device.

According to a further aspect, a computer program product is described. The computer program may comprise executable instructions for performing the method steps outlined in the present document when executed on a computer.

It should be noted that the methods and systems including its preferred embodiments as outlined in the present patent application may be used standalone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 illustrates a block diagram of example signal processing at a coherent optical receiver;
Fig. 2 shows a block diagram of an example butterfly filter for polarization de-multiplexing;
Fig. 3a illustrates a block diagram of improved example signal processing at a coherent receiver;
Fig. 3b illustrates a block diagram of another improved example signal processing at a coherent receiver;
Fig. 3c illustrates a block diagram of a further improved example signal processing at a coherent receiver;
Fig. 4 shows example data formats in a schematic manner;
Fig. 5 shows a block diagram of an improved example butterfly filter for polarization de-multiplexing; and
Fig. 6 illustrates characteristics of example training sequences in the complex plain.

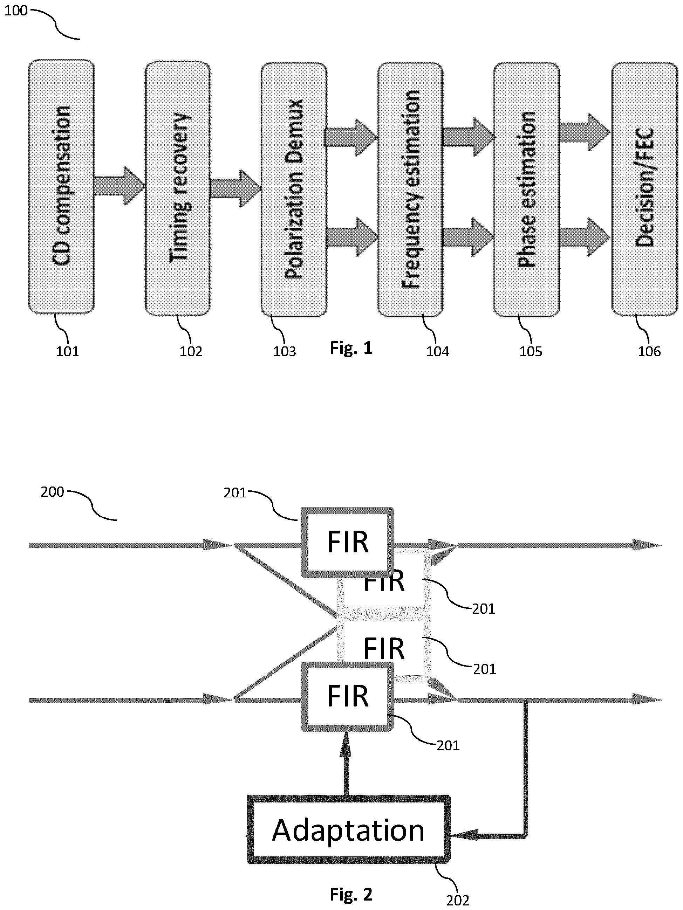

Fig. 1 shows a block diagram of example signal processing 100 at a coherent optical receiver of an optical transmission system comprising a transmitter and the coherent optical receiver. The coherent receiver typically comprises an optical-to-digital converter (usually an optical-to-analog and a subsequent analog-to-digital converter), providing a digital signal derived from the received optical signal. The digital signal typically comprises an in-phase and a quadrature-phase component. Furthermore, the coherent receiver usually comprises a digital signal processor configured to compensate for distortions incurred by an optical signal during the transmission via a particular WDM transmission channel of the optical transmission system. The digital signal processor operates on the digital signal.

The digital signal processing or the digital signal processor (DSP) 100 comprises a chromatic dispersion (CD) compensation unit 101 which is adapted to compensate for CD distortion effects incurred by the optical signal. Furthermore, the DSP 100 comprises a clock (or timing) recovery unit 102 for recovering a clocking signal used within the optical transmission system, thereby enabling the optical receiver to synchronize with the symbol rate of the optical transmission system.

The optical signal transmitted via the WDM transmission channels is typically polarization multiplexed. This means that the optical signal comprises two orthogonally polarized signal components (each at a particular baud rate, e.g. at 28Gbaud or at 32.5Gbaud and each comprising an in-phase component and a quadrature-phase component). The polarization demultiplexing unit 103 is configured to isolate the two orthogonally polarized signal components from the received signal. For this purpose, the polarization demultiplexing unit 103 may comprise a demultiplexing filter 200 comprising four FIR (Finite Impulse Response) filters 201 arranged in a butterfly structure (see Fig. 2). The FIR filters 201 have a pre-determined number N of filter taps (also referred to as filter coefficients) which may be determined using a CMA (Constant Modulus Algorithm) executed in the adaptation unit 202. The FIR filters 201 may typically be divided into two filter components, a so called common mode component and a so called differential mode component. The differential mode component is primarily responsible for turning the polarization plane of the received signal, in order to correctly identify the polarization planes of the two orthogonally polarized signal components. The common mode component is primarily responsible for removing undesirable cross-talk distortions within the received signal, which may be due to interferences of the particular received signal in one polarization plane with the signal from the orthogonal polarization plane.

Furthermore, the DSP 100 comprises a carrier frequency estimation and compensation unit 104 which is adapted to determine an offset between the carrier frequency of the received optical signal and the frequency of a local oscillator used within the coherent receiver (in particular within the optical-to-analog converter of the coherent receiver). Additional components of the DSP 100 are typically a carrier phase estimation and compensation unit 105 configured to estimate and compensate distortions incurred on the phase of the received signal.

Finally, the compensated received signal is submitted to symbol identification in the detection unit 106, thereby recovering the data transmitted over the optical transmission channel.

Typically, the polarization demultiplexing unit 103 is the most critical block of digital signal processing, as it compensates for the fast variations of PMD (Polarization Mode Dispersion) of the optical transmission channel. As shown in Fig. 2, the polarization demultiplexing unit 103 typically comprises a bank 200 of four FIR filters 201 arranged in a butterfly structure. The filter taps of the FIR filters 201 are determined and adapted continuously within a feedback loop comprising an adaptation unit 202. The adaptation unit 202 may execute a CMA algorithm which continuously adapts the filter taps in a "blind" manner. In other words, the CMA algorithm determines the filter taps of the FIR filters 201 solely based on the samples of the digital signal derived from the received optical signal. The filter taps are typically determined such that the filtered signal downstream of the polarization de-multiplexing unit 103 (i.e. subsequent to filtering with the filter bank 200) exhibits pre-determined signal characteristics. By way of example, for signals of unit amplitude, the CMA may try to minimize the magnitude of the error term $E = (|s_{out}|-1)^2$ at the output of the polarization de-multiplexing unit 103, wherein $|s_{out}|$ is the intensity (or amplitude) of an output signal $s_{out}$ of the polarization de-multiplexing unit 103.

The CMA algorithm was introduced by Godard (IEEE Tr. Comm, vol.28, no. 11. pp. 1867-1875, 1980) and the description thereof is incorporated by reference. Furthermore, the CMA is discussed in the document "Digital Equalization of 40Gbit/s per Wavelength Transmission over 2480km of Standard Fiber without Optical Dispersion Compensation", S.J. Savory et al., Proceedings of ECOC 2006, Cannes, France, paper Th2.5.5, Sep. 2006. The description of the CMA in this document is hereby incorporated by reference.

Due to the adaptation 202 using a feedback loop, the capability of the polarization demultiplexing unit 103 to follow fast PMD (Polarization Mode Dispersion) variations may be limited. Notably when applying higher level modulation formats (e.g. 16-QAM instead of QPSK) the CMA is less sensitive. If applying the multi modulus algorithm (MMA) the number of samples available for feedback is further reduced, thereby further decreasing the maximum adaptation speed of the adaptation algorithm.

As such, it is to be expected that when moving to optical transmission systems with an increased transmission rate (e.g. 400Gb/s per WDM channel), the adaptation speed of blind adaptation algorithms used within the digital signal processor 100 of a coherent optical receiver will not be sufficient to appropriately adapt to varying WDM channel conditions. This is particularly challenging for the polarization demultiplexing unit 103 which typically deals with the compensation of fast varying PMD. It is proposed in the present document to overcome the above mentioned technical problems by making use of a training assisted adaptation scheme for adapting the digital signal processing 100 at a coherent optical receiver to varying conditions of the WDM transmission channels.

The training assisted adaptation may be optimized for speed, i.e. the training assisted adaption may be designed such that the adaptation rate of the digital signal processing 100 is in line with the transmission rate of the optical transmission system. Training assisted adaption makes use of training data which is inserted into the optical signal. The training data is typically inserted in a periodic manner at a pre-determined training data frequency. Furthermore, the training assisted adaption may make use of synchronization data which is inserted into the optical signal, in order to allow the DSP of the coherent receiver to align the signal processing for the reception of the training data. The synchronization data may be combined with the training data. In other words, the training data may also be used for synchronization purposes. In an example embodiment of a 100Gb/s transmission system, the maximum overhead for training data may be around 1%, the update frequency of the training data may be 10MHz and the length of a data frame may be 100ns.

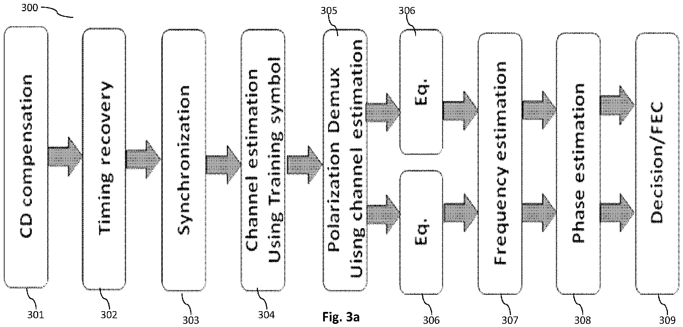

Fig. 3a illustrates an improved example digital signal processor 300 of a coherent optical receiver. The DSP 300 makes use of training assisted adaption. The DSP 300 comprises a CD compensation unit 301 and a timing recovery unit 302 which may correspond to the CD compensation unit 101 and the timing recovery unit 102 of the DSP 100 of Fig. 1. Furthermore, the DSP 300 comprises a synchronization unit 303 which is adapted to align the DSP 300 with the training data frequency. For this purpose, the synchronization unit 303 may detect a synchronization symbol embedded within the data signal. As indicated above, the synchronization symbol may be a separate synchronization symbol without further usage or the synchronization symbol may be the symbol applied subsequently for channel estimation.

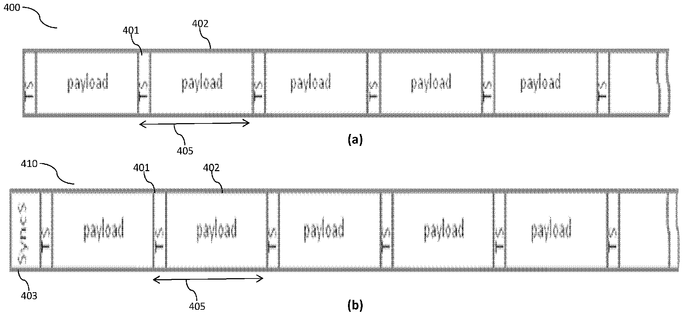

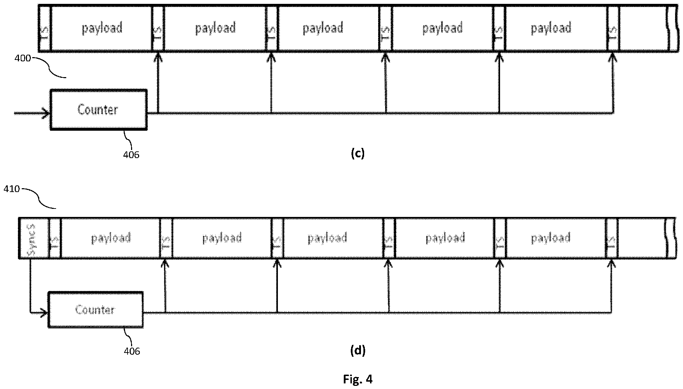

Fig. 4 shows example formats 400, 410 of data transmitted via the optical WDM transmission system. According to the data format 400, the data comprises blocks of payload data 402 which are separated by blocks of training symbol (TS) data 401. The combination of a block of payload data 402 and a block of TS data 401 forms a data frame 405. The TS data 401 is inserted in a periodic manner at a TS frequency (e.g. TS frequency = 10MHz). The payload data may carry single carrier data using any kind of modulation scheme such as QPSK, 16-QAM, x-QAM and others. The TS data 401 may comprise data using preferably the same modulation scheme as the payload data 402. In a preferred embodiment, the power of TS data 401 is the same as the power of the payload data 402. Preferably, the peak-to-average power ratio of the TS data 401 is lower or equal compared to the peak-to-average power ratio of the payload data 402. The data format 410 further comprises explicit synchronization symbol data 403 (referred to as sync data 403). Explicit sync data 403 may be inserted upon establishing an optical transmission channel between a transmitter and the coherent receiver, i.e. explicit sync data 403 may be inserted during the boot phase of the transmission channel. In addition, the sync data 403 may be inserted periodically, in order to allow for a re-synchronization of the DSP 300 to the received digital signal.

Hence, the data transmitted via the optical transmission channel is arranged in a frame structure, wherein each data frame 405 has a pre-determined length (e.g. a frame length of 100ns) and where each data frame 405 comprises payload data 402 and TS data 401. The TS data 401 may account for approximately 1% of the data comprised within a data frame 405. The TS data 401 may be positioned at a pre-determined position within a data frame 405, e.g. at the beginning of the data frame 405 (as illustrated in Fig. 4) or at the end of the data frame 405. The frame structure may be recovered by the synchronization unit 303. In other words, the synchronization unit 303 may use the TS data 401 and/or the sync data 403 comprised within the received digital signal, in order to synchronize the DSP 300 to the frame structure, i.e. in order to determine a time instant corresponding to the beginning of a data frame 405. For this purpose, the synchronization unit 303 may be configured to look for training symbols (TS data 401) or look for synchronization symbols (sync data 403) comprised within the received digital signal.

The TS data 401 and/or the sync data 403 may comprise a pre-determined data structure, in order to enable the synchronization unit 303 to identify the TS data 401 and/or the sync data 403 for the digital signal, thereby enabling a synchronization of the DSP 300 with the received digital signal. It may be shown that when using a symmetry and/or periodicity within the time-domain of a training symbol or a synchronization symbol (i.e. within the TS data 401 and/or within the sync data 403), this symmetry and/or periodicity may be used at the coherent receiver to identify the TS data 401 and/or the sync data 403 from the received digital signal. By way of example, a training symbol and/or a sync symbol may comprise two identical sub-sequences A of $M/2$ samples, i.e. the time-domain symbol of $M$ samples may be written as a sequence [A,A] of the two identical sub-sequences A. This means that the time-domain symbol comprises two identical halves. Using correlation techniques, the synchronization unit 303 may determine the correlation of two succeeding sub-sequences of $M/2$ samples of the digital signal. The correlation may be determined for a plurality of succeeding sub-sequences of $M/2$ samples of the digital signal, wherein the sub-sequences are shifted by one sample at a time. As such, the synchronization unit 303 may determine a sequence of correlation values. The synchronization unit 303 may determine the presence of the TS data 401 (i.e. of the training symbol) and/or of the sync data 403 (i.e. of the synchronization symbol), by determining that the correlation of the two succeeding sub-sequences of $M/2$ samples exceeds a correlation threshold.

More complex pre-determined structures of the training symbol / synchronization symbol may be used to improve the quality of the synchronization. By way of example, the training symbol of $M$ samples may comprise four subsequences [C, D, C*, D*], wherein C* and D* are the conjugate complex of C and D, and wherein C and D have a length of $M/4$ samples. The sub-sequences C and D may be symmetric with respect to each other. The use of training symbols / synchronization symbols having a pre-determined structure in the time-domain has been described in the context of OFDM radio transmission in Park e.a., "A Novel Timing Estimation Method for OFDM Systems", IEEE Comm. Letters, Vol. 7, pp. 239-241, May 2003; and Schmidl, Cox, "Robust frequency and timing synchronization for OFDM," IEEE Trans. Commun., vol. 45, pp. 1613-1621, Dec. 1997. These documents are incorporated by reference.

As indicated above, the TS data 401 and/or the sync data 403 may be inserted periodically. After having synchronized the DSP 300 to the frame structure 400, 410 of the received digital signal, the succeeding TS data 401 (and the payload data 402) can be identified using a counter 406 which points to the next TS data 401 (see Figs. 4 (c) and (d)). This is possible due to the periodic frame structure of the received digital signal which is known at the coherent receiver.

As already outlined above, the tasks of channel estimation and equalization performed by the DSP 300 (and in particular by the polarization de-multiplexing unit 305) typically comprise polarization de-multiplexing, optimization of the sampling phase and an optimized filtering of the received digital signal for optimum performance depending on transmitter and receiver characteristics. The TS data 401 comprised within the received digital signal is typically known at the coherent receiver. As such, the deviation of the known TS data from the TS data 401 received within the digital signal may be used to perform an estimation of the optical transmission channel. Due to the limited length and frequency of the training symbols comprised within the TS data 401, the accuracy of channel estimation may be limited. As such, it may be beneficial to combine the TS data based channel estimation with other signal processing components at the DSP 300. In particular, it may be beneficial to embed the channel estimation using the training symbol (i.e. channel estimation unit 304) subsequent (i.e. downstream of) CD compensation (performed by the CD compensation unit 301). Furthermore, the use of additional post-equalization (e.g. within the post-equalization units 306) may be beneficial. As such, the tasks of channel estimation may be distributed to the different DSP components, notably the CD compensation unit 301, the channel equalization unit 304, the polarization de-multiplexing unit 305 and the post-equalization units 306. The compensation for fast varying PMD may be performed by the training assisted channel equalization (in the channel estimation unit 304 and the subsequent polarization de-multiplexing unit 305), the adaptation of an optimized sampling phase and an optimized channel bandwidth may be performed by the post-equalization units 306. Additional components of the DSP 300 may be a frequency estimation and compensation unit 307, a phase estimation and compensation unit 308 and a decision unit 309.

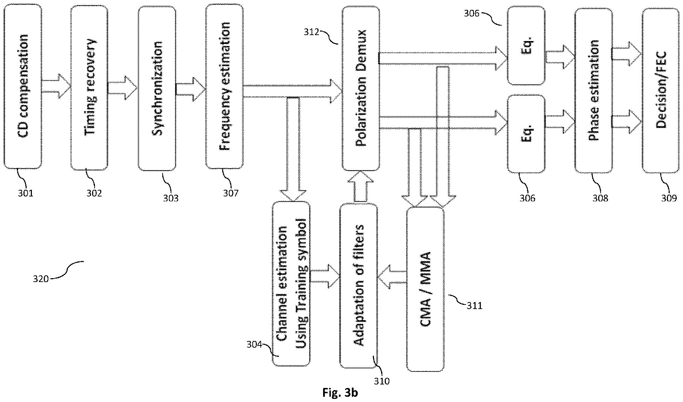

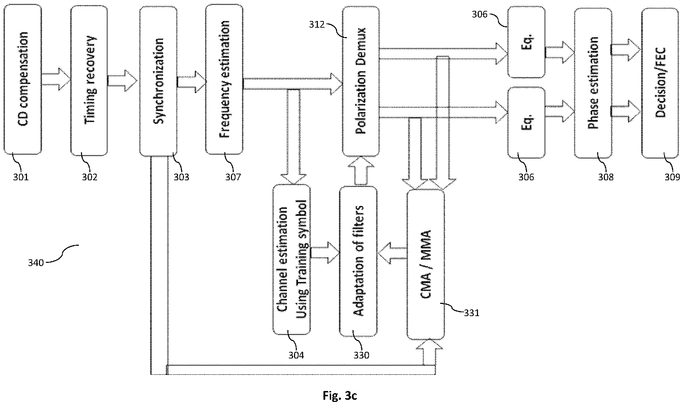

It should be noted that in case of higher errors incurred within the transmission channel, i.e. in case of higher errors within the polarization de-multiplexing unit 305, the post-equalization units 306 may be replaced by a further butterfly equalizer (as illustrated e.g. in Fig. 2), i.e. by a further polarization de-multiplexing unit 103 as shown in Fig. 1. Compared to the polarization de-multiplexing unit 103 using a single butterfly equalizer 200, the input signal of the further polarization de-multiplexing unit in Fig. 3 is already pre-equalized using the polarization de-multiplexing unit 305 (which makes use of the training symbol based channel estimation). As a result of the pre-equalization using the polarization de-multiplexing unit 305, no residual rotation of the polarization is present in the signal at the output of the polarization de-multiplexing unit 305, thereby relaxing the requirements for the blind equalization performed within the further polarization de-multiplexing unit 103.

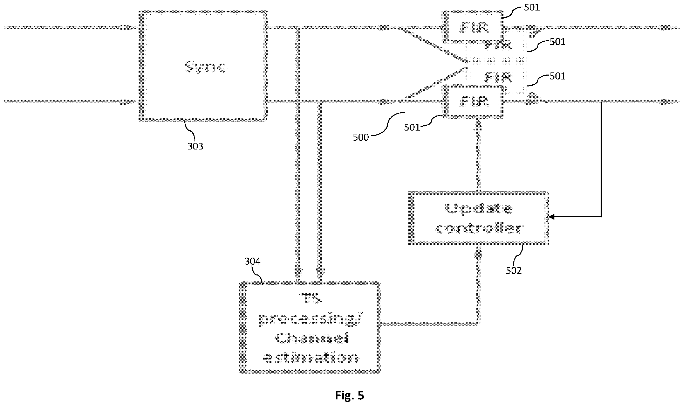

Overall, the DSP 300 of Fig. 3a comprises a channel estimation unit 303 which is configured to determine and to adapt the filter coefficients of a butterfly filter comprised in the polarization de-multiplexing unit 305. Such a butterfly filter 500 is illustrated in Fig. 5. The butterfly filter 500 comprises four FIR filters 501, wherein the filter coefficients of the FIR filters 501 are updated using an update controller 502. Furthermore, Fig. 5 shows the synchronization unit 303 and the channel estimation unit 304. As indicated above, the synchronization unit 303 identifies the synchronization symbol (e.g. within the sync data 403) enabling the subsequent identification of training symbols (e.g. within the TS data 401). The channel estimation unit 304 processes the TS data 401 with respect to the transmitted training symbol and outputs the channel estimation. The update controller 502 updates the filter coefficients of the FIR filters 501 for the butterfly filter 500. The update of the coefficients may be performed as : old coefficient + factor x delta. It should be noted that the filtering performed by the polarization de-multiplexing unit 305 may be performed in the frequency domain. In this case, the input signal to the polarization de-multiplexing unit 305 is derived from the received digital signal using a frequency domain transformation (e.g. a Fast Fourier Transform). In a similar manner, the FIR filters 501 are represented in the frequency domain. The output signal of the polarization de-multiplexing unit 305 may be transformed into the time domain using an inverse transformation (e.g. an inverse Fast Fourier Transform).

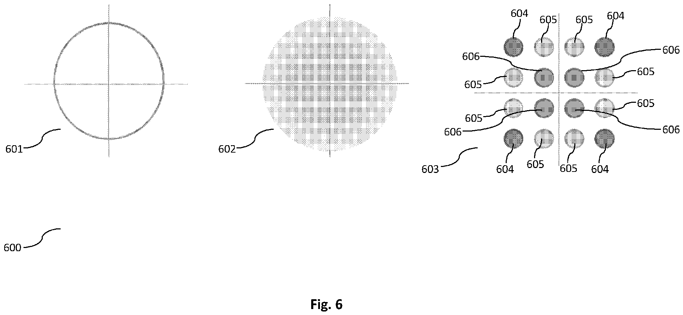

As indicated above, the TS data 401 comprises training symbols which are known by the DSP 300. Possible schemes for synthesizing training symbols are shown in Fig. 6. Typically, a training symbol (TS) comprises two TS components which are orthogonal with respect to each other. In other words, the TS comprises a first TS component for the first polarization of the optical signal and a second TS component for the second polarization of the optical signal. The first and second TS components may be orthogonal with respect to one another, thereby allowing the coherent receiver (e.g. the channel estimation unit 304) to separate the first and second TS components. Fig. 6 shows three different schemes for synthesizing training symbols (or more precisely, for synthesizing TS components for a polarization multiplexed training symbol). A first scheme for synthesizing a training symbol (or a TS component) is the so called Zadoff Chu sequence, which makes use of samples which are located on the unity circle of the complex plain in the time domain (see reference numeral 601). A second scheme for synthesizing a training symbol makes use of the definition of tones in the frequency domain. The second scheme results in samples which are distributed in the complex plain in the time domain (see reference numeral 602).

A third scheme may make use of regular time domain sequences, i.e. symbol sequences which comprise symbols of the underlying modulation scheme used within the optical transmission system, e.g. 16-QAM symbols are illustrated in the graph 603 of Fig. 6. As such, the training symbol (and/or the TS components) comprises the same constellation points that are used for transmitting the payload data 402. The training symbol / TS component may comprise a sequence of symbols from all constellation points of the underlying modulation scheme (e.g. from all possible 16-QAM symbols). Alternatively, the training symbol / TS component may comprise a sequence of symbols from selected sub-groups of constellation points (e.g. the sub-group comprising the constellation points 604, the sub-group comprising the constellation points 605, or the sub-group comprising the constellation points 606). It may be possible to switch between the different selection schemes (e.g. from training symbol to training symbol). The sub-group comprising the constellation points 604 may be preferable in order to achieve noise limitation, and the sub-group comprising the constellation points 606 may be preferable when the transmission system is operated close to the nonlinear limit. The synthesis of the training symbol or the TS components may be performed by mapping of short pseudo random bit streams (e.g. of the length of the training symbol. The adaptation of switching between different selection schemes via the receiver and a back channel may be integrated into the general management (e.g. the higher level management) of the optical transmission system.

The channel estimation unit 304 may be configured to apply one or more of the following measures in order to improve the quality of the channel estimation, e.g. in the presence of noise (e.g. in the presence of relatively high noise levels).

- A first measure could be to determine the channel estimation (i.e. to determine the FIR filter coefficients) using a plurality of TS data 401, i.e. using the TS data 401 of several succeeding data frames 405. The individual channel estimations may be averaged over time, thereby reducing the influence of noise. The averaging of the channel estimations may be implemented as a leaky integrator with an update time constant, thereby putting more emphasis on recent channel estimates than on older channel estimates.

- As a further measure, the update time constants for the filter coefficients may be decreased in the presence of strong variations of the estimated channel and increased in case of more stable channels. As such, the update time constant may be adapted in accordance to the volatility of the transmission channel.

- As another measure, the coefficient update of the FIR filters 501 may be distributed across a plurality of steps after the determination of a new channel estimate (i.e. after occurrence of the TS data 401). This allows for a smooth transition from filter coefficients which are based on the former TS data 401 and filter coefficients which are based on the current TS data 401. In other words, this may be used to implement a smooth behavior of the polarization demultiplexing unit 305.

- A further measure could be to average the individual channel estimates in the frequency domain.

- As another measure a constant amplitude vs. frequency may be considered.

- As a further measure a linear phase vs. frequency may be considered.

In the following, further details regarding the channel estimation using a sequence of TS data 401 will be provided. Typically, the channel estimation unit 304 operates in the frequency domain. For this purpose, the received digital signal may be transformed from the time domain into the frequency domain, e.g. using a Fast Fourier Transform (FFT) or a Discrete Fourier Transform (DFT). By way of example, the received digital signal may be transformed into the frequency domain at the input to the CD compensation unit 301. As such, the channel estimation unit 304 may receive a complex frequency domain input signal $X(\omega)$ derived from the received digital signal. The input signal $X(\omega)$ typically comprises two polarization components, i.e. $X(\omega) = \begin{pmatrix} X_1(\omega) \\ X_1(\omega) \end{pmatrix}$. The channel estimation unit 304 is directed at estimating the

transfer function $H(\omega)$ which converts the input signal $X(\omega)$ into the output signal $Y(\omega)$, wherein the signal $Y(\omega)$ corresponds to the signal which was originally transmitted by the transmitter. As such, the transfer function $H(\omega)$ models the inverse of a transfer function of the transmission channel. In view of the fact that the input signal $X(\omega)$ and the output signal $Y(\omega) = \begin{pmatrix} Y_1(\omega) \\ Y_2(\omega) \end{pmatrix}$ are vectors which each comprise two polarization components, the transfer function $H(\omega)$ typically is a transfer matrix

$$H(\omega) = \begin{pmatrix} H_{11}(\omega) & H_{12}(\omega) \\ H_{21}(\omega) & H_{22}(\omega) \end{pmatrix}.$$ Overall, the channel estimation unit 304 is configured to determine $H(\omega)$, such that an error $\varepsilon$ (e.g. a mean square error) between the estimated output signal $\hat{Y}(\omega) = H(\omega)X(\omega)$ and the originally transmitted signal $Y(\omega)$ is minimized or reduced.

In case of the transmission of the TS data 401, the input signal $X(\omega)$ and the originally transmitted signal $Y(\omega)$ are known. Hence, the transfer functions $H_{11}(\omega)$, $H_{12}(\omega)$, $H_{21}(\omega)$, $H_{22}(\omega)$ can be determined by minimizing or reducing the errors $\varepsilon_{11} = f(Y_1(\omega) - H_{11}(\omega)X_1(\omega))$, $\varepsilon_{12} = f(Y_1(\omega) - H_{12}(\omega)X_2(\omega))$, $\varepsilon_{21} = f(Y_2(\omega) - H_{21}(\omega)X_1(\omega))$, and $\varepsilon_{22} = f(Y_2(\omega) - H_{22}(\omega)X_2(\omega))$, wherein $f(\ )$ is a pre-determined function, e.g. a mean square function or an absolute value function.

The transfer functions $H_{11}(\omega)$, $H_{12}(\omega)$, $H_{21}(\omega)$, $H_{22}(\omega)$ may be transferred into the time-domain, thereby yielding the filter coefficients of the FIR filters 501 of the butterfly filter 500 of the polarization demultiplexing unit 305. By way of example, a FIR filter 501 having N filter coefficients may be written as $\sum_{n=0}^{N-1} c_{ij} z^{-n}$, i, j = 1, 2.

As indicated above, the TS data 401 may be inserted into the digital signal at a TS frequency of e.g. 10MHz. Consequently, new FIR filter coefficients (i.e. new transfer functions) may be determined at a rate which corresponds to the TS frequency, i.e. the FIR filters 501 of the polarization demultiplexing unit 305 may be updated at a rate which corresponds to the TS frequency. In order to smoothen the transition from an old set of FIR filters 501 to a new set of FIR filters 501 (thereby yielding a continuity criterion), there may be a blending process across a certain number of symbols from the old set of FIR filters 501 to the new set of FIR filters 501. By way of example, the difference between the new coefficients $c_{ij}^k$ and the old coefficients $c_{ij}^{k-1}$ may be determined as $\Delta_{ij} = c_{ij}^k - c_{ij}^{k-1}$, and the transition may be smoothend by adding a fraction $\Delta_{ij} / P$ of the difference to the old coefficients $c_{ij}^{k-1}$ for $P$ succeeding symbols or for $P$ succeeding updated steps for the filter coefficients. Subsequently, the FIR filters 501 with the new coefficients $c_{ij}^k$ are applied to the symbols of the payload data 402 following the TS data 401 which has been used to determine the new coefficients $c_{ij}^k$. In an embodiment, the factor $P$ is selected such that the transition between the old coefficients $c_{ij}^{k-1}$ and the new coefficients $c_{ij}^k$ is performed across the entire period between two succeeding blocks of TS data 401. As such, the smooth updated of the FIR filter coefficients is a continuous process without discontinuities caused by the periodic training based filter coefficient determination.

It should be noted that the TS based adaption of the FIR filters 501 and the blind adaption of the FIR filters 501 (e.g. using the CMA algorithm) may be combined. This is illustrated by the DSP 320 shown in Fig. 3b. The DSP 320 comprises a channel estimation unit 304 as described above, thereby providing a new estimate of the FIR filter coefficients $c_{ij}^k$ at the TS frequency. Furthermore, the CMA algorithm may perform blind adaption of the filter coefficient $c_{ij}$ at a reverse loop frequency which is typically one or two orders of magnitude greater than the TS frequency. By way of example, the blind adaption unit 311 (using the CMA algorithm or a Multi Modulus Algorithm as described in the European patent application EP11290070.9) determines a coefficient update every 64 or 128 symbols. The channel estimation unit 304 may determine a coefficient update every 4000 or 8000 symbols.

The coefficients of the FIR filters 501 may be updated using the reverse loop (via the blind adaption unit 311) and/or using the forward loop (via the channel estimation unit 304). A joint update (using the reverse loop and the forward loop) may be performed e.g. at the reverse loop frequency (e.g. every 64 or 128 symbols). Alternatively, an independent update of the coefficients may be performed at the respective frequencies (i.e. at the reverse loop frequency and at the TS frequency, respectively).

A combined update process for the FIR filter coefficients may be written as follows

$$c_{ij}^k = c_{ij}^{k-1} + \lambda_f \Delta_{ij} + \lambda_r \varepsilon_r,$$

wherein $\lambda_f$ is a forgetting factor for the forward loop (i.e. for the training based adaptation), $\lambda_r$ is a forgetting factor for the reverse loop (e.g. for a CMA based adaptation), $\Delta_{ij}$ may e.g. be the above mentioned difference between an old coefficient and a new training based determined coefficient and $\varepsilon_f$ is an error determined based on the underlying feedback algorithm (e.g. based on the CMA algorithm.

The forgetting factors $\lambda_f$ and $\lambda_r$ may be managed. By way of example, the filter coefficients may be analyzed in the frequency domain. If the filter coefficients in the frequency domain vary systematically (e.g. in phase and amplitude) a forgetting factor (e.g. the forgetting factors $\lambda_{ij}$) may be decreased (or may remain constant if the filter coefficient variation is the same as previously). If the filter coefficients in the frequency domain vary randomly (due to noise), a forgetting factor (e.g. the forgetting factors $\lambda_{ij}$) may be increased (or may remain constant if same as previously). The filter coefficients may be converted into the time domain conversion e.g. using an inverse FFT (IFFT) and the error $\Delta_{ij}$ may be determined by a comparison of the new coefficients with the old coefficients.

It should be noted that in Fig. 3b the frequency estimation unit 307 has been moved forward upstream of the channel estimation unit 304 and the polarization de-multiplexing unit 305, and downstream of the synchronization unit 303. This has shown improved performance of the subsequent channel estimation performed by the channel estimation unit 304. It should be noted that in a similar manner, the frequency estimation unit 307 may be positioned downstream of the synchronization unit 303 and upstream of the channel estimation unit 304 in the context of Fig. 3 a.

Fig. 3c illustrates another example DSP 340. In the illustrated example, the feedback loop 331 is interrupted at time instants, when a channel estimation is determined based on received TS data 401. This may be beneficial when non regular constellations (e.g. based on the schemes 601, 602 of Fig. 6) are used for the TS data 401. The synchronization unit 303 determines the arrival of TS data 401 and synchronizes / windows the CMA (Multi-Modulus Algorithm) of the blind adaptation unit 331. The overall adaptation of the FIR filters 330 may be solely based on the forward (training based) adaptation path at the time instants of TS data 401.

In the present document a method and system for increasing the adaptation speed of the signal processing in coherent transmission systems are described, thereby enabling high transmission rates (e.g. 400Gb/s WDM transmission systems). The method and system make use of a training symbol based adaptation scheme for determining the coefficients of a polarization demultiplexer of a coherent optical receiver of the transmission system. The training symbol based adaptation scheme may be combined with a blind adaptation scheme.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1.    A coherent optical receiver adapted to recover a plurality of payload symbols (402) transmitted over a transmission channel within a received optical signal; wherein the received optical signal is a polarization multiplexed optical signal comprising a first component and a second component; wherein the received optical signal comprises a sequence of received training symbols (401) corresponding to a sequence of transmitted training symbols (401); the coherent optical receiver comprising

    - an optical-to-digital converter adapted to convert the received optical signal into a digital signal comprising two polarization components;
    - a synchronization unit (303) adapted to extract the sequence of received training symbols (401) from the digital signal;
    - a channel estimation unit (304) adapted to determine an indication of a transfer function of the transmission channel, based on the sequence of received training symbols (401) and based on the sequence of transmitted training symbols (401);
    - a polarization de-multiplexing unit (305) adapted to rotate the digital signal, thereby yielding a polarization de-multiplexed digital signal; and
- a blind adaptation unit (306, 311) adapted to determine an indication of a target deviation of a characteristic of the polarization de-multiplexed digital signal from an expected characteristic; wherein the polarization de-multiplexing unit (305) is adapted to rotate the digital signal, based on the indication of the transfer function of the transmission channel and based on the indication of the target deviation.

2. The coherent optical receiver of claim 1, wherein

- the sequence of transmitted training symbols comprises a sequence of first training symbol components and a sequence of second training symbol components, respectively; and
- the sequences of first and second training symbol components are orthogonal with respect to one another.

3. The coherent optical receiver of any previous claim, wherein

- the received optical signal comprises a sequence of synchronization symbols;
- the sequence of synchronization symbols comprises a plurality of sub-sequences;
- at least some of the plurality of sub-sequences are correlated with each other; and
- the synchronization unit (303) is adapted to detect the sequence of synchronization symbols from the received optical signal by analyzing a correlation between sub-sequences of symbols comprised within the received optical signal.

4. The coherent optical receiver of claim 3, wherein the synchronization unit (303) is adapted to extract the sequence of received training symbols (401) from the digital signal at a pre-determined distance from the detected sequence of synchronization symbols.

5. The coherent optical receiver of any previous claim, wherein

- the polarization de-multiplexing unit (305) comprises a butterfly filter (500) comprising a plurality of finite impulse response filters (501);
- the butterfly filter (500) is adapted to filter the digital signal, thereby yielding the polarization de-multiplexed digital signal;
- the plurality of finite impulse response filters (501) comprise a plurality of sets of filter coefficients, respectively; and
- the coherent optical receiver comprises an adaptation unit (310) adapted to determine the plurality of sets of filter coefficients based on the indication of the transfer function of the transmission channel and based on the indication of the target deviation.

6. The coherent optical receiver of claim 5, wherein

- the synchronization unit (303) is adapted to extract a subsequent second sequence of received training symbols (401) from the digital signal; wherein the second sequence of received training symbols (401) corresponds to a second sequence of transmitted training symbols (401);
- the channel estimation unit (304) is adapted to determine an second indication of the transfer function of the transmission channel, based on the second sequence of received training symbols (401) and based on the second sequence of transmitted training symbols (401); and
- the adaptation unit (310) is adapted to determine the plurality of sets of filter coefficients also based on the second indication of the transfer function of the transmission channel.

7. The coherent optical receiver of claim 6, wherein the adaptation unit (310) is adapted to

- determine a first plurality of sets of filter coefficients based on the indication of the transfer function of the transmission channel;
- determine a second plurality of sets of filter coefficients based on the second indication of the transfer function of the transmission channel; and
- determine the plurality of sets of filter coefficients based on a smooth transition from the first plurality of sets of filter coefficients to the second plurality of sets of filter coefficients.

8. The coherent optical receiver of claim 7, wherein

- sequences of training symbols (401) are received periodically at a training symbol time interval;
- the smooth transition is such that a time interval for the transition from the first plurality of sets of filter coefficients to the second plurality of sets of filter coefficients corresponds to the training symbol time interval.

9. The coherent optical receiver of claim 7, wherein

- the smooth transition makes use of a delta value determined based on the first plurality of sets of filter coefficients and the second plurality of sets of filter coefficients and a forget factor.

10. The coherent optical receiver of claim 8, wherein

- the forget factor for the smooth transition is decreased if a respective difference between the first plurality of sets of filter coefficients and the second plurality of sets of filter coefficients varies randomly in the frequency domain; and
- the forget factor for the smooth transition is increased if the respective difference between the first plurality of sets of filter coefficients and the second plurality of sets of filter coefficients varies systematically in the frequency domain.

11. The coherent optical receiver of any of claims 5 to 10, wherein

- the blind adaptation unit (311) is adapted to determine an update of the plurality of sets of filter coefficients based on the target deviation; and
- the adaptation unit (310) is adapted to adapt the plurality of sets of filter coefficients also based on the update provided by the blind adaptation unit (311).

12. The coherent optical receiver of any previous claim, wherein

- the received optical signal comprises a plurality of sequences of received training symbols occurring at a training symbol frequency;
- the channel estimation unit (304) is adapted to determine an updated indication of the transfer function of the transmission channel at the training symbol frequency;
- the blind adaptation unit (306, 311) is adapted to determine a plurality of indications of the target deviation of the characteristic of the polarization de-multiplexed digital signal from the expected characteristic at a blind adaptation frequency; and
- the polarization de-multiplexing unit (305) is adapted to rotate the digital signal, based on the plurality of updated indications of the transfer function of the transmission channel and based on the plurality of indications of the target deviation.

13. The coherent optical receiver of any previous claim, wherein

- the transmitted training symbols (401) originate from a same underlying constellation than the payload symbols (402);
- the underlying constellation comprises symbols with different amplitudes; and
- the transmitted training symbols (401) have a maximum amplitude of the symbols comprised in the underlying constellation, or the transmitted training symbols (401) have a medium amplitude of the symbols comprised in the underlying constellation.

14. The coherent optical receiver of any previous claim, wherein the channel estimation unit (304) is adapted to determine the indication of the transfer function of the transmission channel by reducing an error between the sequence of transmitted training symbols (401) and the sequence of received training symbols (401) subsequent to polarization de-multiplexing by the polarization de-multiplexing unit (305).

15. A method for recovering a plurality of payload symbols (402) transmitted over a transmission channel within a received optical signal using a coherent optical receiver; wherein the received optical signal is a polarization multiplexed optical signal comprising a first polarization component and a second polarization component; wherein the received optical signal comprises a sequence of received training symbols (401) corresponding to a sequence of transmitted training symbols (401); the method comprising

- converting the received optical signal into a digital signal comprising two polarization components;
- extracting the sequence of received training symbols (401) from the digital signal;
- determining an indication of a transfer function of the transmission channel, based on the sequence of received training symbols (401) and based on the sequence of transmitted training symbols (401); and
- rotating the digital signal, thereby yielding a polarization de-multiplexed digital signal;
- determining an indication of a target deviation of a characteristic of the polarization de-multiplexed digital signal from an expected characteristic; wherein the rotating of the digital signal is based on the indication of the transfer function of the transmission channel and based on the indication of the target deviation.

**Patentansprüche**

1. Kohärenter optischer Empfänger, angepasst zum Zurückgewinnen einer Vielzahl von Nutzdatensymbolen (402), übertragen über einen Übertragungskanal innerhalb eines empfangenen optischen Signals; wobei das empfangene optische Signal ein optisches Polarisationsmultiplexsignal ist, umfassend eine erste Komponente und eine zweite Komponente; wobei das empfangene optische Signal eine Sequenz von empfangenen Trainingssymbolen (401) umfasst, die einer Sequenz von übertragenen Trainingssymbolen (401) entspricht; wobei der kohärente optische Empfänger umfasst

- einen Optik-Digital-Wandler, angepasst zum Umwandeln des empfangenen optischen Signals in ein digitales Signal, umfassend zwei Polarisationskomponenten;

- eine Synchronisationseinheit (303), angepasst zum Extrahieren der Sequenz von empfangenen Trainingssymbolen (401) aus dem digitalen Signal;

- eine Kanalschätzungseinheit (304), angepasst zum Bestimmen einer Anzeige einer Übertragungsfunktion des Übertragungskanals, aufbauend auf der Sequenz von empfangenen Trainingssymbolen (401) und aufbauend auf der Sequenz von übertragenen Trainingssymbolen (401);

- eine Polarisationsdemultiplexeinheit (305), angepasst zum Drehen des digitalen Signals, wodurch ein digitales Polarisationsdemultiplexsignal erzielt wird; und

- eine Blindanpassungseinheit (306, 311), angepasst zum Bestimmen einer Anzeige einer Zielabweichung einer Eigenschaft des digitalen Polarisationsdemultiplexsignals von einer unerwarteten Eigenschaft; wobei die Polarisationsdemultiplexeinheit (305) angepasst ist zum Drehen des digitalen Signals, aufbauend auf der Anzeige der Übertragungsfunktion des Übertragungskanals und aufbauend auf der Anzeige der Zielabweichung.

2. Kohärenter optischer Empfänger nach Anspruch 1, wobei

- die Sequenz von übertragenen Trainingssymbolen jeweils eine Sequenz von ersten Trainingssymbolkomponenten und eine Sequenz von zweiten Trainingssymbolkomponenten umfasst; und

- die Sequenzen der ersten und zweiten Trainingssymbolkomponenten orthogonal zueinander stehen.

3. Kohärenter optischer Empfänger nach einem beliebigen der vorstehenden Ansprüche, wobei

- das empfangene optische Signal eine Sequenz von Synchronisationssymbolen umfasst;
- die Sequenz von Synchronisationssymbolen eine Vielzahl von Subsequenzen umfasst;
- mindestens einige der Vielzahl von Subsequenzen miteinander korrelieren; und
- die Synchronisationseinheit (303) angepasst ist zum Erkennen der Sequenz von Synchronisationssymbolen von einem empfangenen optischen Signal durch Analysieren der Korrelation zwischen Subsequenzen von Symbolen, die innerhalb des empfangenen optischen Signal umfasst sind.

4. Kohärenter optischer Empfänger nach Anspruch 3, wobei die Synchronisationseinheit (303) angepasst ist zum Extrahieren der Sequenz von empfangenen Trainingssymbolen (401) aus dem digitalen Signal in einer vorgegebenen Entfernung von der erkannten Sequenz von Synchronisationssymbolen.

5. Kohärenter optischer Empfänger nach einem beliebigen der vorstehenden Ansprüche, wobei

- die Polarisationsdemultiplexeinheit (305) einen Schmetterlingsfilter (500) umfasst, umfassend eine Vielzahl von Filtern mit endlicher Impulsantwort (501);
- der Schmetterlingsfilter (500) angepasst ist zum Drehen des digitalen Signals, wodurch ein digitales Polarisationsdemultiplexsignal erzielt wird;
- die Vielzahl von Filtern mit endlicher Impulsantwort (501) jeweils eine Vielzahl von Sätzen von Filterkoeffizienten umfassen; und
- der kohärente optische Empfänger eine Anpassungseinheit (310) umfasst, angepasst zum Bestimmen der Vielzahl von Sätzen von Filterkoeffizienten, aufbauend auf der Anzeige der Übertragungsfunktion des Übertragungskanals und aufbauend auf der Anzeige der Zielabweichung.

6. Kohärenter optischer Empfänger nach Anspruch 5, wobei

- die Synchronisationseinheit (303) angepasst ist zum Extrahieren einer nachfolgenden zweiten Sequenz von empfangenen Trainingssymbolen (401) aus dem digitalen Signal; wobei die zweite Sequenz von empfangenen Trainingssymbolen (401) einer zweiten Sequenz von übertragenen Trainingssymbolen (401) entspricht;
- die Kanalschätzungseinheit (304) angepasst ist zum Bestimmen einer zweiten Anzeige der Übertragungsfunktion des Übertragungskanals, aufbauend auf der zweiten Sequenz von empfangenen Trainingssymbolen (401) und aufbauend auf der zweiten Sequenz von übertragenen Trainingssymbolen (401); und
- die Anpassungseinheit (310) angepasst ist zum Bestimmen der Vielzahl von Sätzen von Filterkoeffizienten, außerdem aufbauend auf der zweiten Anzeige der Übertragungsfunktion des Übertragungskanals.

7. Kohärenter optischer Empfänger nach Anspruch 6, wobei die Anpassungseinheit (310) angepasst ist zum

- Bestimmen einer ersten Vielzahl von Sätzen von Filterkoeffizienten, aufbauend auf der Anzeige der Übertragungsfunktion des Übertragungskanals;
- Bestimmen einer zweiten Vielzahl von Sätzen von Filterkoeffizienten, aufbauend auf der zweiten Anzeige der Übertragungsfunktion des Übertragungskanals; und
- Bestimmen der Vielzahl von Sätzen von Filterkoeffizienten, aufbauend auf einem gleichmäßigen Übergang von der ersten Vielzahl von Sätzen von Filterkoeffizienten zu einer zweiten Vielzahl von Sätzen von Filterkoeffizienten.

8. Kohärenter optischer Empfänger nach Anspruch 7, wobei

   - Sequenzen von Trainingssymbolen (401) regelmäßig in einem Trainingssymbolzeitintervall empfangen werden;
   - der gleichmäßige Übergang so beschaffen ist, dass ein Zeitintervall für den Übergang von der ersten Vielzahl von Sätzen von Filterkoeffizienten zur zweiten Vielzahl von Sätzen von Filterkoeffizienten dem Trainingssymbolzeitintervall entspricht.

9. Kohärenter optischer Empfänger nach Anspruch 7, wobei

   - der gleichmäßige Übergang einen Deltawert verwendet, bestimmt auf der Basis der ersten Vielzahl von Sätzen von Filterkoeffizienten und der zweiten Vielzahl von Sätzen von Filterkoeffizienten und eines Vergessensfaktors.

10. Kohärenter optischer Empfänger nach Anspruch 8, wobei

    - der Vergessensfaktor für den gleichmäßigen Übergang verringert wird, wenn eine entsprechende Differenz zwischen der ersten Vielzahl von Sätzen von Filterkoeffizienten und der zweiten Vielzahl von Sätzen von Filterkoeffizienten zufällig im Frequenzbereich variiert; und
    - der Vergessensfaktor für den gleichmäßigen Übergang erhöht wird, wenn die entsprechende Differenz zwischen der ersten Vielzahl von Sätzen von Filterkoeffizienten und der zweiten Vielzahl von Sätzen von Filterkoeffizienten systematisch im Frequenzbereich variiert.

11. Kohärenter optischer Empfänger nach einem der Ansprüche 5 bis 10, wobei

    - die Blindanpassungseinheit (311) angepasst ist zum Bestimmen einer Aktualisierung der Vielzahl von Sätzen von Filterkoeffizienten, aufbauend auf der Zielabweichung; und

    - die Anpassungseinheit (310) angepasst ist zum Anpassen der Vielzahl von Sätzen von Filterkoeffizienten, außerdem aufbauend auf der von der Blindanpassungseinheit (311) bereitgestellten Aktualisierung.

12. Kohärenter optischer Empfänger nach einem beliebigen der vorstehenden Ansprüche, wobei

    - das empfangene optische Signal eine Vielzahl von Sequenzen von empfangenen Trainingssymbolen umfasst, die mit einer Trainingssymbolfrequenz auftreten;
    - die Kanalschätzungseinheit (304) angepasst ist zum Bestimmen einer aktualisierten Anzeige der Übertragungsfunktion des Übertragungskanals mit der Trainingssymbolfrequenz;
    - die Blindanpassungseinheit (306, 311), angepasst ist zum Bestimmen einer Vielzahl von Anzeigen der Zielabweichung der Eigenschaft des digitalen Polarisationsdemultiplexsignals von der erwarteten Eigenschaft mit einer Anpassungsfrequenz; und
    - die Polarisationsdemultiplexeinheit (305) angepasst ist zum Drehen des digitalen Signals, aufbauend auf der Vielzahl von aktualisierten Anzeigen der Übertragungsfunktion des Übertragungskanals und aufbauend auf Vielzahl der Anzeige der Zielabweichung.

13. Kohärenter optischer Empfänger nach einem beliebigen der vorstehenden Ansprüche, wobei

    - die übertragenen Trainingssymbole (401) aus der gleichen Unterlagerungskonstellation wie die Nutzdatensymbole (402) stammen;
    - die Unterlagerungskonstellation Symbole mit verschiedenen Amplituden umfasst; und
    - die übertragenen Trainingssymbole (401) eine maximale Amplitude der in der Unterlagerungskonstellation enthaltenen Symbole aufweisen oder die übertragenen Trainingssymbole (401) eine mittlere Amplitude der in der Unterlagerungskonstellation enthaltenen Symbole aufweisen.

14. Kohärenter optischer Empfänger nach einem beliebigen der vorstehenden Ansprüche, wobei die Kanalschätzungseinheit (304) angepasst ist zum Bestimmen der Anzeige der Übertragungsfunktion des Übertragungskanals durch Verringern eines Fehlers zwischen der Sequenz von empfangenen Trainingssymbolen (401) und der Sequenz von übertragenen Trainingssymbolen (401) im Anschluss an das Polarisationsdemultiplexing durch die Polarisationsdemultiplexeinheit (305).

15. Verfahren zum Zurückgewinnen einer Vielzahl von Nutzdatensymbolen (402), übertragen über einen Übertragungskanal innerhalb eines empfangenen optischen Signals unter Verwendung eines kohärenten optischen Empfängers; wobei das empfangene optische Signal ein optisches Polarisationsmultiplexsignal ist, umfassend eine erste Polarisationskomponente und eine zweite Polarisationskomponente, wobei das empfangene optische Signal eine Sequenz von empfangenen Trainingssymbolen (401) umfasst, die einer Sequenz von übertragenen Trainingssymbolen (401) entspricht; wobei das Verfahren umfasst

- Umwandeln des empfangenen optischen Signals in ein digitales Signal, umfassend zwei Polarisationskomponenten;
- Extrahieren der Sequenz von empfangenen Trainingssymbolen (401) aus dem digitalen Signal;
- Bestimmen einer Anzeige einer Übertragungsfunktion des Übertragungskanals, aufbauend auf der Sequenz von empfangenen Trainingssymbolen (401) und aufbauend auf der Sequenz von übertragenen Trainingssymbolen (401); und
- Drehen des digitalen Signals, wodurch ein digitales Polarisationsdemultiplexsignal erzielt wird;
- Bestimmen einer Anzeige von einer Zielabweichung einer Eigenschaft des digitalen Polarisationsdemultiplexsignals von einer erwarteten Eigenschaft; wobei das Drehen des digitalen Signals aufbaut auf der Anzeige der Übertragungsfunktion des Übertragungskanals und aufbaut auf der Anzeige der Zielabweichung.

**Revendications**

1. Récepteur optique cohérent adapté pour récupérer une pluralité de symboles de charge utile (402) transmis sur un canal de transmission dans un signal optique reçu ; dans lequel le signal optique reçu est un signal optique multiplexé en polarisation comprenant une première composante et une deuxième composante ; dans lequel le signal optique reçu comprend une séquence de symboles d'apprentissage reçus (401) correspondant à une séquence de symboles d'apprentissage transmis (401) ; le récepteur optique cohérent comprenant

- un convertisseur optique-numérique adapté pour convertir le signal optique reçu en un signal numérique comprenant deux composantes de polarisation ;
- un module de synchronisation (303) adapté pour extraire la séquence de symboles d'apprentissage reçus (401) du signal optique ;

- un module d'estimation de canal (304) adapté pour déterminer une indication d'une fonction de transfert du canal de transmission, en fonction de la séquence de symboles d'apprentissage reçus (401) et en fonction de la séquence de symboles d'apprentissage transmis (401) ;
- un module de démultiplexage de polarisation (305) adapté pour déphaser le signal numérique, produisant ainsi un signal numérique démultiplexé en polarisation ; et
- un module d'adaptation aveugle (306, 311) adapté pour déterminer une indication d'un écart cible d'une caractéristique du signal numérique démultiplexé en polarisation par rapport à une caractéristique attendue; le module de démultiplexage de polarisation (305) étant adapté pour déphaser le signal numérique, en fonction de l'indication de la fonction de transfert du canal de transmission et en fonction de l'indication de l'écart cible.

2. Récepteur optique cohérent selon la revendication 1, dans lequel

- la séquence de symboles d'apprentissage transmis comprend une séquence de premières composantes de symbole d'apprentissage et une séquence de deuxièmes composantes de symbole d'apprentissage, respectivement ; et
- les séquences de premières et deuxièmes composantes de symbole d'apprentissage sont orthogonales l'une par rapport à l'autre.

3. Récepteur optique cohérent selon l'une quelconque des revendications précédentes, dans lequel

- le signal optique reçu comprend une séquence de symboles de synchronisation ;
- la séquence de symboles de synchronisation comprend une pluralité de sous-séquences ;
- au moins certaines sous-séquences de la pluralité de sous-séquences sont corrélées entre elles ; et
- le module de synchronisation (303) est adapté pour détecter la séquence de symboles de synchronisation du signal optique reçu en analysant une corrélation entre les sous-séquences de symboles comprises dans le signal optique reçu.

4. Récepteur optique cohérent selon la revendication 3, dans lequel le module de synchronisation (303) est adapté pour extraire la séquence de symboles d'apprentissage reçus (401) du signal numérique à une distance prédéterminée de la séquence de symboles de synchronisation détectée.

5. Récepteur optique cohérent selon l'une quelconque des revendications précédentes, dans lequel

- le module de démultiplexage de polarisation (305) comprend un filtre papillon (500) comportant une pluralité de filtres à réponse impulsionnelle finie (501) ;
- le filtre papillon (500) est adapté pour filtrer le signal numérique, produisant ainsi le signal numérique démultiplexé en polarisation ;
- la pluralité de filtres à réponse impulsionnelle finie (501) comprend une pluralité d'ensembles de coefficients de filtre, respectivement ; et
- le récepteur optique cohérent comprend un module d'adaptation (310) adapté pour déterminer la pluralité d'ensembles de coefficients de filtre en fonction de l'indication de la fonction de transfert du canal de transmission et en fonction de l'indication de l'écart cible.

6. Récepteur optique cohérent selon la revendication 5, dans lequel

- le module de synchronisation (303) est adapté pour extraire une deuxième séquence suivante de symboles d'apprentissage reçus (401) du signal numérique ; la deuxième séquence de symboles d'apprentissage reçus (401) correspondant à une deuxième séquence de symboles d'apprentissage transmis (401) ;
- le module d'estimation de canal (304) est adapté pour déterminer une deuxième indication de la fonction de transfert du canal de transmission, en fonction de la deuxième séquence de symboles d'apprentissage reçus (401) et en fonction de la deuxième séquence de symboles d'apprentissage transmis (401) ; et
- le module d'adaptation (310) est adapté pour déterminer la pluralité d'ensembles de coefficients de filtre également en fonction de la deuxième indication de la fonction de transfert du canal de transmission.

7. Récepteur optique cohérent selon la revendication 6, dans lequel le module d'adaptation (310) est adapté pour

- déterminer une première pluralité d'ensembles de coefficients de filtre en fonction de l'indication de la fonction de transfert du canal de transmission ;
- déterminer une deuxième pluralité d'ensembles de coefficients de filtre en fonction de la deuxième indication de la fonction de transfert du canal de transmission ; et
- déterminer la pluralité d'ensembles de coefficients de filtre en fonction d'une transition progressive de la première pluralité d'ensembles de coefficients de filtre à la deuxième pluralité d'ensembles de coefficients de filtre.

8. Récepteur optique cohérent selon la revendication 7, dans lequel

- les séquences de symboles d'apprentissage (401) sont reçues périodiquement selon un intervalle de temps de symbole d'apprentissage ;
- la transition progressive se fait de telle sorte qu'un intervalle de temps pour la transition de la première pluralité d'ensembles de coefficients de filtre à la deuxième pluralité d'ensembles de coefficients de filtre correspond à l'intervalle de temps de symbole d'apprentissage.

9. Récepteur optique cohérent selon la revendication 7, dans lequel

- la transition progressive utilise une valeur delta déterminée en fonction de la première pluralité d'ensembles de coefficients de filtre et de la deuxième pluralité d'ensembles de coefficients de filtre et d'un facteur d'oubli.

10. Récepteur optique cohérent selon la revendication 8, dans lequel

- le facteur d'oubli pour la transition progressive est diminué si une différence respective entre la première pluralité d'ensembles de coefficients de filtre et la deuxième pluralité d'ensembles de coefficients de filtre varie de façon aléatoire dans le domaine fréquentiel ; et
- le facteur d'oubli pour la transition progressive est augmenté si la différence respective entre la première pluralité d'ensembles de coefficients de filtre et la deuxième pluralité d'ensembles de coefficients de filtre varie de façon systématique dans le domaine fréquentiel.

11. Récepteur optique cohérent selon l'une quelconque des revendications 5 à 10, dans lequel

- le module d'adaptation aveugle (311) est adapté pour déterminer une mise à jour de la pluralité d'ensembles de coefficients de filtre en fonction de l'écart cible ; et
- le module d'adaptation (310) est adapté pour ajuster la pluralité d'ensembles de coefficients de filtre également en fonction de la mise à jour fournie par le module d'adaptation aveugle (311).

12. Récepteur optique cohérent selon l'une quelconque des revendications précédentes, dans lequel

- le signal optique reçu comprend une pluralité de séquences de symboles d'apprentissage reçus se produisant selon une fréquence de symbole d'apprentissage ;

- le module d'estimation de canal (304) est adapté pour déterminer une indication actualisée de la fonction de transfert du canal de transmission selon la fréquence de symbole d'apprentissage ;

- le module d'adaptation aveugle (306, 311) est adapté pour déterminer une pluralité d'indications de l'écart cible de la caractéristique du signal numérique démultiplexé en polarisation par rapport à la caractéristique attendue selon une fréquence d'adaptation aveugle ; et

- le module de démultiplexage de polarisation (305) est adapté pour déphaser le signal numérique, en fonction de la pluralité d'indications actualisées de la fonction de transfert du canal de transmission et en fonction de la pluralité d'indications de l'écart cible.

13. Récepteur optique cohérent selon l'une quelconque des revendications précédentes, dans lequel

- les symboles d'apprentissage transmis (401) proviennent de la même constellation sous-jacente que les symboles de charge utile (402) ;

- la constellation sous-jacente comprend des symboles d'amplitudes différentes ; et

- les symboles d'apprentissage transmis (401) ont une amplitude maximale qui est celle des symboles compris dans la constellation sous-jacente, ou les symboles d'apprentissage transmis (401) ont une amplitude moyenne qui est celle des symboles compris dans la constellation sous-jacente.

14. Récepteur optique cohérent selon l'une quelconque des revendications précédentes, dans lequel le module d'estimation de canal (304) est adapté pour déterminer l'indication de la fonction de transfert du canal de transmission en réduisant l'erreur entre la séquence de symboles d'apprentissage transmis (401) et la séquence de symboles d'apprentissage reçus (401) suivant le démultiplexage de polarisation par le module de démultiplexage de polarisation (305).

15. Procédé de récupération d'une pluralité de symboles de charge utile (402) transmis sur un canal de transmission dans un signal optique reçu à l'aide d'un récepteur optique cohérent, dans lequel le signal optique reçu est un signal optique multiplexé en polarisation comprenant une première composante de polarisation et une deuxième composante de polarisation ; dans lequel le signal optique reçu comprend une séquence de symboles d'apprentissage reçus (401) correspondant à une séquence de symboles d'apprentissage transmis (401) ; le procédé comprenant les étapes suivantes

- convertir le signal optique reçu en un signal numérique comprenant deux composantes de polarisation ;

- extraire la séquence de symboles d'apprentissage reçus (401) du signal numérique ;

- déterminer une indication d'une fonction de transfert du canal de transmission, en fonction de la séquence de symboles d'apprentissage reçus (401) et en fonction de la séquence de symboles d'apprentissage transmis (401) ; et

- déphaser le signal numérique, produisant ainsi un signal numérique démultiplexé en polarisation ;

- déterminer une indication d'un écart cible d'une caractéristique du signal numérique démultiplexé en polarisation par rapport à une caractéristique attendue ; le déphasage du signal numérique étant fonction de l'indication de la fonction de transfert du canal de transmission et fonction de l'indication de l'écart cible.

Fig. 1

Fig. 2

Fig. 3a

**Fig. 3b**

Fig. 3c

400

401 402

| TS | payload | TS | payload | TS | payload | TS | payload | TS | payload | TS |

405

(a)

410

401 402

| SyncS | TS | payload | TS | payload | TS | payload | TS | payload | TS | payload | TS |

403

405

(b)

EP 2 639 977 B1

(c)

(d)

Fig. 4

24

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100329683 A1
- EP 11290070 A

**Non-patent literature cited in the description**

- Proper polarization demultiplexing in coherent optical receiver using constant modulus algorithm with training mode. Optoelectronics and Communications Conference (OECC), 2010 15. IEEE, 05 July 2010, 768-769
- **GODARD.** *IEEE Tr. Comm,* 1980, vol. 28 (11), 1867-1875
- **S.J. SAVORY et al.** Digital Equalization of 40Gbit/s per Wavelength Transmission over 2480km of Standard Fiber without Optical Dispersion Compensation. *Proceedings of ECOC 2006,* September 2006
- **PARK E.A.** A Novel Timing Estimation Method for OFDM Systems. *IEEE Comm. Letters,* May 2003, vol. 7, 239-241
- **SCHMIDL, COX.** Robust frequency and timing synchronization for OFDM. *IEEE Trans. Commun.,* December 1997, vol. 45, 1613-1621